# EUROPEAN PATENT SPECIFICATION

(11) **EP 2 757 621 B1**
(45) Date of publication and mention of the grant of the patent: **13.12.2023**
(21) Application number: 14150393.8
(22) Date of filing: 08.01.2014
(51) Int. Cl.: H01M 4/90, H01M 4/92, H01M 8/10, H01M 8/1004

(54) **Catalyst for fuel cell, electrode for fuel cell, membrane-electrode assembly for fuel cell and fuel cell system using the same**
Katalysator für Brennstoffzelle, Elektrode für Brennstoffzelle, Membranelektrodenanordnung für Brennstoffzelle und Brennstoffzellensystem damit
Catalyseur pour pile à combustible, électrode pour pile à combustible, ensemble membrane-électrode pour pile à combustible et système de pile à combustible l'utilisant

(30) Priority: 18.01.2013 KR 20130006095; 20.11.2013 KR 20130141423
(43) Date of publication of application: 23.07.2014
(73) Proprietor: Kolon Industries, Inc., Seoul 07793 (KR)
(72) Inventor: Kim, Hee-Tak, Gyeonggi-do (KR); Cho, Sung-Yong, Gyeonggi-do (KR); Song, Kah-Young, Gyeonggi-do (KR)
(74) Representative: Marks & Clerk LLP

(56) References cited:
- US-A- 5 728 485
- US-A1- 2004 072 061
- US-A1- 2005 181 270
- US-A1- 2005 238 948
- US-A1- 2010 159 301

## Description

### BACKGROUND

### 1. Field

The present invention relates to a catalyst for a fuel cell, an electrode for a fuel cell, a membrane-electrode assembly for a fuel cell, and a fuel cell system using the same.

### 2. Description of the Related Art

A fuel cell is a power generation system for producing electrical energy through an electrochemical redox reaction of an oxidant with a hydrogen gas or hydrogen contained in a hydrocarbon-based material such as methanol, ethanol, or a natural gas.

Such a fuel cell is a clean energy source that can replace fossil fuels. It includes a stack composed of unit cells and has an advantage of producing various ranges of power. Since it has a four to ten times higher energy density than a small lithium battery, it has been highlighted as a small portable power source.

Typical examples of the fuel cell include a polymer electrolyte membrane fuel cell (PEMFC) and a direct oxidation fuel cell (DOFC). The direct oxidation fuel cell using methanol as a fuel is called a direct methanol fuel cell (DMFC).

The direct oxidation fuel cell has lower energy density than that of the polymer electrolyte membrane fuel cell but has the advantage of easy handling of a fuel, being operated at room temperature due to its low operation temperature, and needing no additional fuel reforming processor. On the other hand, the polymer electrolyte membrane fuel cell has an advantage of high energy density and power output.

In the above-mentioned fuel cell system, the stack that substantially generates electricity includes several ones to several scores of unit cells stacked adjacent to one another, and each unit cell is formed of a membrane-electrode assembly (MEA) and a separator (also referred to as a bipolar plate). The membrane-electrode assembly is composed of an anode (also referred to as a "fuel electrode" or an "oxidation electrode") and a cathode (also referred to as an "air electrode" or a "reduction electrode"), which are separated by a polymer electrolyte membrane.

In the above-mentioned fuel cell system, a fuel is supplied to an anode and adsorbed on catalysts of the anode and then, oxidized to produce protons and electrons. The electrons are transferred into a cathode via an external circuit, and the protons are transferred into the cathode through the polymer electrolyte membrane. In addition, an oxidant is supplied to the cathode, which is reacted with the protons and the electrons on catalysts of the cathode, thereby producing electricity along with water.

However, the fuel cell has a performance deterioration problem due to elution and re-deposition of the catalysts or corrosion of a supporter supporting the catalysts. Relevant prior art relating to catalysts for fuel cells supported on carbon nanoparticles and/or nano fibers can be found in: US 2005/181270 A1, US 2005/238948 A1 and US 5 728 485 A, respectively.

### SUMMARY

An aspect of an embodiment of the present invention is directed toward a catalyst for a fuel cell capable of suppressing structural collapse of the catalyst layer due to corrosion of a supporter and of improving cell performance.

An aspect of an embodiment of the present invention is directed toward an electrode for a fuel cell using the catalyst.

An aspect of an embodiment of the present invention is directed toward a membrane-electrode assembly for a fuel cell including the electrode.

An aspect of an embodiment of the present invention is directed toward a fuel cell system including the membrane-electrode assembly.

According to one embodiment of the present invention, provided is a catalyst for a fuel cell that includes an active metal catalyst; and a composite supporter supporting the active metal catalyst and including a spherical-shaped supporter and a fibrous supporter, wherein the fibrous supporter comprises a graphitized carbon nanofiber, which is included in an amount of about 5 wt% to about 40 wt% based on the total amount of the composite supporter, according to the independent claim 1.

The fibrous supporter may be included in an amount of about 5 wt% to about 30 wt% based on the total amount of the composite supporter.

The fibrous supporter relative to the spherical-shaped supporter may have a diameter ratio ranging from about 2 to about 10.

The spherical-shaped supporter may include at least one selected from graphite and carbon black. The carbon black is selected from the group consisting of denka black, ketjen black, acetylene black, channel black, furnace black, lamp black, thermal black, and a combination thereof.

The fibrous supporter comprises graphitized carbon nanofiber.

The composite supporter may be included in an amount of about 20 wt% to about 80 wt% based on the total amount of the catalyst.

According to another embodiment of the present invention, provided is an electrode for a fuel cell including an electrode substrate; and a catalyst layer including the catalyst disposed on the electrode substrate.

The catalyst layer may further include an ionomer, and the ionomer may be included in an amount of about 15 wt% to about 50 wt% based on the total amount of the catalyst layer.

According to yet another embodiment of the present invention, provided is a membrane-electrode assembly for a fuel cell that includes a cathode; an anode facing the cathode; and a polymer electrolyte membrane interposed between the cathode and the anode. The cathode and the anode include an electrode substrate and the catalyst layer disposed on the electrode substrate, respectively.

According to still another embodiment of the present invention, provided is a fuel cell system that includes a fuel supplier for supplying a mixed fuel including a fuel and water; a reforming part for reforming the mixed fuel and generating a reformed gas including a hydrogen gas; a stack including the membrane-electrode assembly and separators disposed on any one side of the membrane-electrode assembly, and generating electrical energy through an electrochemical reaction of the reformed gas supplied from the reforming part with an oxidant; and an oxidant supplier for supplying the oxidant to the reforming part and the stack.

Other embodiments of the present invention are described in the detailed description.

The present invention may realize a fuel cell having improved performance by suppressing structural collapse of a catalyst layer for a fuel cell despite corrosion of a supporter.

At least some of the above and other features of the invention are set out in the claims.

### BRIEF DESCRIPTION OF THE DRAWINGS

FIG. 1 is a schematic view showing the structural change of a comparable catalyst layer before and after corrosion of a supporter;
FIG. 2 is a schematic view showing the structural change of a catalyst layer according to one embodiment of the present invention before and after corrosion of a supporter;
FIG. 3 is a schematic view showing a membrane-electrode assembly (MEA) for a fuel cell according to one embodiment;
FIG. 4 is a schematic view showing the structure of a fuel cell system according to one embodiment of the present invention;
FIG. 5 is the exploded perspective view of a stack of a fuel cell system according to one embodiment;
FIGs. 6A and 6B are scanning electron microscope photographs respectively showing the surface of a catalyst layer for a fuel cell according to Example 2 before and after corrosion of a supporter;
FIGs. 7A and 7B are scanning electron microscope photographs respectively showing the surface of a catalyst layer for a fuel cell according to Comparative Example 1 before and after corrosion of a supporter;
FIG. 8 is a graph showing current density of the catalyst layer for a fuel cell according to Comparative Example 1 as the repeated cycles; and
FIG. 9 is a graph showing current density of the catalyst layer for a fuel cell according to Example 2 as the repeated cycles.

### DETAILED DESCRIPTION

The embodiments will be described more fully hereinafter, in which example embodiments are shown. This disclosure may, however, be embodied in many different forms and is not be construed as limited to the example embodiments set forth herein.

It will be understood that when an element such as a layer, film, region, or substrate is referred to as being "on" another element, it can be directly on the other element or intervening elements may also be present.

According to one embodiment, a catalyst for a fuel cell includes an active metal catalyst and a composite supporter supporting the active metal catalyst.

The composite supporter includes a spherical-shaped supporter and a fibrous supporter.

A catalyst layer includes the catalyst disposed on an electrode substrate. The catalyst layer for a fuel cell may have structural collapse due to corrosion of the supporter. Specifically, the supporter is corroded and generates carbon dioxide through an electrochemical reaction of carbon and moisture under a high voltage condition according to the following reaction scheme 1, which detaches the metal active catalyst from the supporter and thus, may not only cause loss of the catalyst but also cause structural collapse of the catalyst layer.

[Reaction Scheme 1] C + 2H₂O → CO₂ + 4H⁺ + 4e⁻

The structural collapse of the catalyst layer may not only decrease the amount of an active catalyst but also have a compression effect on the catalyst layer and thus, deteriorate diffusion of air and a fuel and discharge of water and resultantly, decrease power output performance.

According to one embodiment of the present invention, the structural collapse of a catalyst layer is suppressed by using a supporter prepared by mixing the spherical-shaped supporter and the fibrous supporter to improve durability against corrosion, since the fibrous supporter structurally supports the catalyst layer despite corrosion of the spherical-shaped supporter. In addition, a catalyst detached from the spherical-shaped supporter may be reattached to the fibrous supporter and the loss of catalyst may be avoided or reduced.

The spherical-shaped supporter may have a diameter of about 20 nm to about 100 nm, and the fibrous supporter may have a diameter of about 40 nm to 1000 nm.

The fibrous supporter may have greater than or equal to twice as large a diameter as that of the spherical-shaped supporter. The fibrous supporter relative to the spherical-shaped supporter may have a diameter ratio of about 2 to about 10 and particularly, about 2 to about 5. When the fibrous supporter and the spherical-shaped supporter have a diameter ratio within the ranges, the fibrous supporter not only plays a role of a support for maintaining the pore structure of the catalyst layer despite corrosion of the spherical-shaped supporter, but an eluted catalyst is also easily re-deposited on the support.

The composite supporter may include about 60 wt% to about 95 wt% of the spherical-shaped supporter and about 5 wt% to about 40 wt% of the fibrous supporter. Particularly, it may include about 70 wt% to about 95 wt% of the spherical-shaped supporter and about 5 wt% to about 30 wt% of the fibrous supporter. When the fibrous supporter is included within the ranges, the fibrous supporter works sufficiently as a structural support and maintain the surface area of a catalyst. Further, it also improves power output performance as well as minimizing loss of the catalyst, and there may not be much decrease in thickness and porosity of the catalyst layer after the cycles under a high voltage condition.

The spherical-shaped supporter may include at least one selected from graphite and carbon black (such as denka black, ketjen black, acetylene black, channel black, furnace black, lamp black, thermal black, or a combination thereof).

The fibrous supporter may include at least one selected from carbon nanofiber, a graphitized carbon nanofiber, carbon nanotube, carbon nano-horn, and carbon nano wire.

The composite supporter may be included in an amount of about 20 wt% to about 80 wt%. In particular, the composite supporter may be included in an amount of about 30 wt% to about 60 wt% based on the total amount of the catalyst, for example, a sum of the catalyst and the composite supporter. When the composite supporter is included within the range, the supporter has excellent durability against corrosion and suppresses structural collapse of the catalyst layer due to the corrosion.

The catalyst may be any catalyst that can be used at a fuel cell reaction. In one embodiment, the catalyst may be a metal catalyst, and in another embodiment, the catalyst may be a platinum-based catalyst.

The platinum-based catalyst may include platinum, ruthenium, osmium, a platinum-ruthenium alloy, a platinum-osmium alloy, a platinum-palladium alloy and/or a platinum-M alloy (M is at least one transition element selected from Ga, Ti, V, Cr, Mn, Fe, Co, Ni, Cu, Zn, Sn, Mo, W, Rh, and Ru).

In the fuel cell, an anode and a cathode may include the same material. However, an anode catalyst may include a platinum-ruthenium alloy as an active metal in a direct oxidation fuel cell to prevent catalyst poisoning due to carbon monoxide (CO) produced during the anode reaction.

Example platinum-based catalyst may include at least one selected from Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, and Pt/Ru/Sn/W.

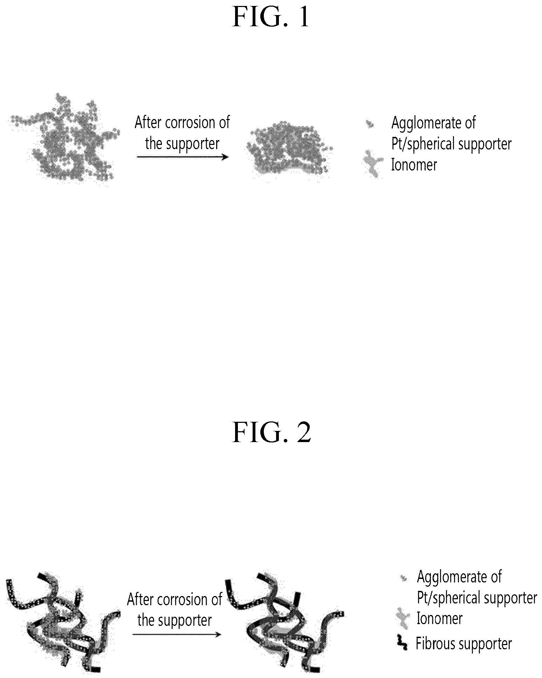

As aforementioned, the catalyst layer according to embodiments of the present invention may be suppressed from structural collapse despite corrosion of the supporter. FIGs. 1 and 2 schematically show the structural collapse of the catalyst layer for better understanding.

FIG. 1 is a schematic view showing the structural change of a comparable catalyst layer before and after corrosion of a supporter, while FIG. 2 is a schematic view showing the structural change of the catalyst layer according to one embodiment of the present invention before and after corrosion of the supporter.

Referring to FIGs. 1 and 2, the comparable catalyst layer has a significant structural change due to corrosion of the supporter, while the catalyst layer of one embodiment of the present invention has not much structural change despite corrosion of the supporter. The reason is that the fibrous supporter structurally works as a support and suppresses structural collapse of the catalyst layer.

According to another embodiment of the present invention, an electrode for a fuel cell including the above-described catalyst layer is provided.

The electrode for a fuel cell includes an electrode substrate and a catalyst layer disposed on the electrode substrate.

The catalyst layer is the same as described above.

The catalyst layer may also include an ionomer to improve adherence of the catalyst layer and transfer property of protons.

The ionomer may be a polymer resin having proton conductivity. More particularly, the ionomer may be a polymer resin having a cation exchange group selected from a sulfonic acid group, a carboxylic acid group, a phosphoric acid group, a phosphonic acid group, and a derivative thereof at its side chain.

The ionomer may be at least one polymer resin selected from a fluoro-based polymer, a benzimidazole-based polymer, a polyimide-based polymer, a polyetherimide-based polymer, a polyphenylenesulfide-based polymer, a polysulfone-based polymer, a polyethersulfone-based polymer, a polyetherketone-based polymer, a polyether-etherketone-based polymer, and a polyphenylquinoxaline-based polymer. In particular, the ionomer may be at least one polymer resin selected from poly(perfluorosulfonic acid), poly(perfluorocarboxylic acid), a sulfonic acid group-containing copolymer of tetrafluoroethylene and fluorovinylether, sulfide polyetherketone, aryl ketone, poly(2,2'-m-phenylene)-5,5'-bibenzimidazole, and poly(2,5-benzimidazole).

The polymer resin having proton conductivity may include Na, K, Li, Cs, or tetrabutylammonium substituted for hydrogen (H) in a cation exchange group at the terminal end of the side chain. When the hydrogen (H) is substituted by Na in an ion exchange group at the terminal end of the side chain of the polymer resin, NaOH is used. When the hydrogen (H) is substituted with tetrabutylammonium, tetrabutylammonium hydroxide is used. K, Li, or Cs may also be substituted for the hydrogen (H) and provide appropriate compounds. A method of substituting the hydrogen (H) is known in this related art, and therefore, is not further described in detail.

The ionomer may be used singularly or in a combination. The ionomer may be used along with non-conductive compounds to improve adherence of the catalyst layer to the polymer electrolyte membrane. The non-conductive compounds may be used in an appropriate amount controlled according to their purposes.

The non-conductive compounds include at least one selected from polytetrafluoroethylene (PTFE), tetra fluoroethylene-hexafluoropropylene copolymer (FEP), tetrafluoroethylene-perfluoro alkylvinylether copolymer (PFA), ethylene/tetrafluoroethylene (ETFE), an ethylenechlorotrifluoro-ethylene copolymer (ECTFE), polyvinylidenefluoride, a polyvinylidenefluoride-hexafluoropropylene copolymer (PVdF-HFP), dodecylbenzenesulfonic acid, and sorbitol.

The ionomer may be included in an amount of about 15 wt% to about 50 wt%, particularly about 20 wt% to about 40 wt% based on the total amount of the catalyst layer. When the ionomer is included within the range, adherence of the catalyst layer and transportation of protons are improved.

The electrode substrate plays a role of supporting an electrode and diffusing a fuel and an oxidant into the catalyst layer, so that the fuel and the oxidant can easily approach the catalyst layer.

The electrode substrate may be a conductive substrate such as carbon paper, carbon cloth, carbon felt, or a metal cloth (a porous film made of metal fiber or a metal film disposed on the surface of a cloth made of a polymer fiber). The electrode substrate is not limited thereto.

The electrode substrate may undergo a water-repellent-treatment with a fluorinated resin to prevent deterioration of diffusion efficiency of a reactant due to water generated during operation of a fuel cell.

The fluorinated resin may include polytetrafluoroethylene, polyvinylidene fluoride, polyhexafluoropropylene, polyperfluoroalkylvinylether, polyperfluorosulfonylfluoride alkoxyvinyl ether, fluorinated ethylene propylene, polychlorotrifluoroethylene, or a copolymer thereof.

The electrode for a fuel cell may further include a microporous layer to increase diffusion effects of a reactant in the electrode substrate as well as in the electrode substrate and the catalyst layer.

The microporous layer generally includes conductive powders with a particular particle diameter, for example, carbon powder, carbon black, acetylene black, activated carbon, carbon fiber, fullerene, carbon nanotube, carbon nanowire, carbon nano-horn, or carbon nano ring.

According to another embodiment, a membrane-electrode assembly for a fuel cell including the above described electrode is provided.

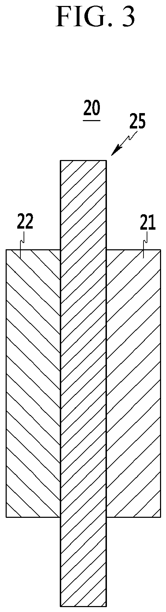

The membrane-electrode assembly for a fuel cell is described referring to FIG. 3.

FIG. 3 is a schematic view showing the membrane-electrode assembly (MEA) according to one embodiment.

Referring to FIG. 3, the membrane-electrode assembly 20 includes a polymer electrolyte membrane 25, a cathode 21, and an anode 22. Here, the polymer electrolyte membrane 25 is between the cathode 21 and the anode 22.

At least either one of the cathode 21 and the anode 22 is the electrode for a fuel cell described above.

The polymer electrolyte membrane 25 may be a solid polymer electrolyte having a thickness of about 10 µm to about 200 µm and act as an ion exchanger for transferring protons produced from the catalyst layer of the anode to the catalyst layer of the cathode.

The polymer electrolyte membrane 25 may be any polymer electrolyte membrane made of any polymer resin having proton conductivity that is used for a polymer electrolyte membrane of a fuel cell. The polymer resin may be a polymer resin having at least one cation exchange group selected from a sulfonic acid group, a carboxylic acid group, a phosphoric acid group, a phosphonic acid group, and a derivative thereof at its side chain.

Examples of the polymer resin may include at least one selected from a fluoro-based polymer, a benzimidazole-based polymer, a polyimide-based polymer, a polyetherimide-based polymer, a polyphenylenesulfide-based polymer, a polysulfone-based polymer, a polyethersulfone-based polymer, a polyetherketone-based polymer, a polyether-etherketone-based polymer, and a polyphenylquinoxaline-based polymer; and more specific examples of the polymer resin may include poly(perfluorosulfonic acid) (commercially available as NAFION^{®}, and NAFION^{®} is a registered trademark of E.I. Du Pont De Nemours and Company, Wilmington, Delaware.), poly(perfluorocarboxylic acid), a sulfonic acid group-containing copolymer of tetrafluoroethylene and fluorovinylether, polyetherketone sulfide, aryl ketone, poly (2,2'-m-phenylene)-5,5'-bibenzimidazole, and poly(2,5-benzimidazole).

According to another embodiment, a fuel cell system including the above described membrane-electrode assembly is provided.

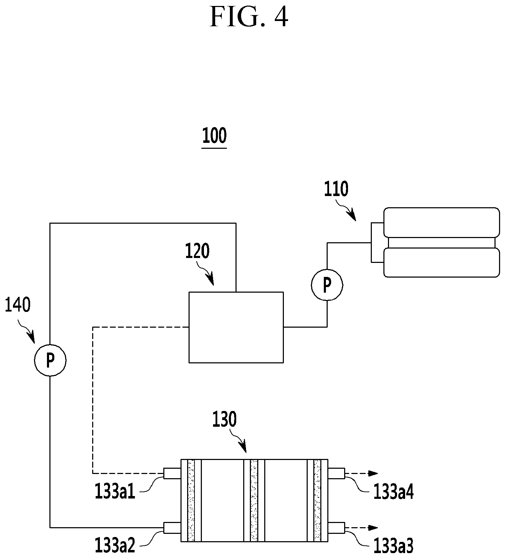

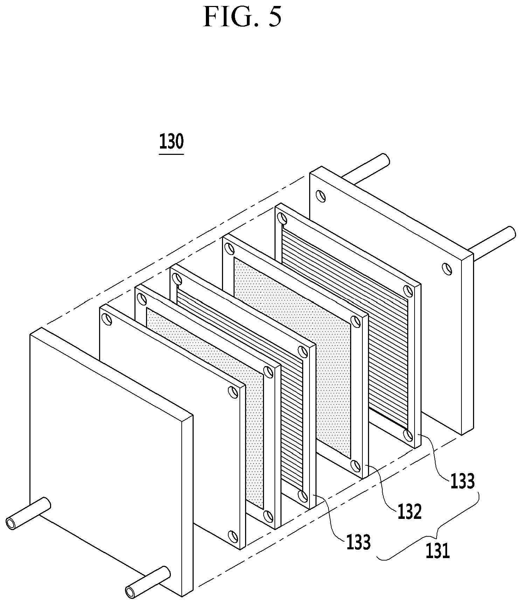

The fuel cell system is described referring to FIGs. 4 and 5. FIGs. 4 and 5 show one example of the fuel cell system, but the present invention is not limited thereto.

FIG. 4 is a schematic view showing the structure of the fuel cell system according to one embodiment of the present invention, and FIG. 5 is an exploded perspective view describing the stack of the fuel cell system in accordance with this embodiment of the present invention.

Referring to FIGs. 4 and 5, a fuel cell system 100 according to this embodiment includes a fuel supplier 110 for supplying a mixed fuel of fuel and water, a reforming part 120 for reforming the mixed fuel and generating a reformed gas including a hydrogen gas; a stack 130 (including the membrane-electrode assembly and separators disposed on both sides of the membrane-electrode assembly) for generating electrical energy through electrochemical reaction of the reformed gas supplied from the reforming part, and an oxidant; and an oxidant supplier 140 for supplying the oxidant to the reforming part 120 and the stack 130.

The stack 130 includes a plurality of unit cells 131 which induce an oxidation/reduction reaction between the reformed gas including hydrogen gas supplied from the reforming part 120 and the oxidant supplied from the oxidant supplier 140 to generate electric energy.

Each unit cell 131 serves as a unit for generating electricity and includes a membrane-electrode assembly 132 which oxidizes and reduces the reformed gas including hydrogen gas and oxygen in the oxidant, and separators 133 (also referred to as bipolar plate) which supply the reformed gas and the oxidant to the membrane-electrode assembly 132. The separators 133 are arranged on both side of the membrane-electrode assembly 132. Herein, the separators that are respectively located at the most exterior sides of the stack are referred to as end plates 133a.

Moreover, the end plate 133a of the separators includes a first supply tube 133a1 having a pipe shape for injecting the reformed gas supplied from the reforming part 120, and a second supply tube 133a2 having a pipe shape for injecting the oxidant. The other end plate 133a includes a first discharge tube 133a3 for discharging the remaining reformed gas that does not finally react in the plurality of unit cells 131, to the outside, and a second discharge tube 133a4 for discharging the remaining oxidant that does not react finally in the plurality of unit cells 131, to the outside.

The following examples illustrate the present invention in more detail. However, it is understood that the present invention is not limited by these examples.

### (Manufacture of Membrane-electrode assembly)

### Example 1

A catalyst layer composition was prepared as follows: a composite supporter including 95 wt% of ketjen black with a diameter of 20 nm as a spherical-shaped supporter and 5 wt% of graphitized carbon nanofiber with a diameter of 100nm as a fibrous supporter was prepared, 32 wt% of a platinum catalyst was supported on 33 wt% of the composite supporter, and 35 wt% of NAFION^{®} (DuPont Chemicals Co., Ltd.) as ionomerwas added thereto.

The catalyst layer composition was coated on a FEP (fluorinated ethylene propylene) film and sufficiently dried at 90°C in an oven for 5 hours to form a catalyst layer. The catalyst layer is used as a cathode catalyst layer in a cathode and an anode catalyst layer in an anode.

The cathode and anode catalyst layers were transferred on a fluorine-based film and removed the FEP film therefrom, fabricating a membrane-catalyst layer assembly. The membrane-catalyst layer assembly was used with a 35BC diffusion layer (SGL Group), fabricating a membrane-electrode assembly.

### Example 2

A membrane-electrode assembly for a fuel cell was fabricated according to the same method as Example 1 except for using a composite supporter including 85 wt% of ketjen black and 15 wt% of graphitized carbon nanofiber.

### Example 3

A membrane-electrode assembly for a fuel cell was fabricated according to the same method as Example 1 except for using a composite supporter including 70 wt% of ketjen black and 30 wt% of graphitized carbon nanofiber.

### Example 4

A membrane-electrode assembly for a fuel cell was fabricated according to the same method as Example 1 except for using a composite supporter including 95 wt% of ketjen black having a diameter of 20 nm and 5 wt% of graphitized carbon nanofiber having a diameter of 50 nm.

### Example 5

A membrane-electrode assembly for a fuel cell was fabricated according to the same method as Example 1 except for using a composite supporter including 95 wt% of ketjen black having a diameter of 20 nm and 5 wt% of graphitized carbon nanofiber having a diameter of 200 nm.

### Comparative Example 1

A membrane-electrode assembly for a fuel cell was fabricated according to the same method as Example 1 except that a catalyst layer composition was prepared by supporting 32 wt% of a platinum catalyst on 33 wt% of ketjen black having a diameter of 20 nm and adding 35 wt% of NAFION^{®} (DuPont Chemistry Co., Ltd.) as ionomer thereto.

### Comparative Example 2

A membrane-electrode assembly for a fuel cell was fabricated according to the same method as Example 1 except for using a composite supporter including 50 wt% of ketjen black and 50 wt% of graphitized carbon nanofiber.

### Comparative Example 3

A membrane-electrode assembly for a fuel cell was fabricated according to the same method as Example 1 except for using a composite supporter including 98 wt% of ketjen black and 2 wt% of graphitized carbon nanofiber.

### Comparative Example 4

A membrane-electrode assembly for a fuel cell was fabricated according to the same method as Example 1 except for using a composite supporter including 55 wt% of ketjen black and 45 wt% of graphitized carbon nanofiber.

### Evaluation 1: Structural Change of Catalyst Layer

The membrane-electrode assemblies according to Example 2 and Comparative Example 1 were cycled by repetitively applying with a voltage of 0.6 V to 1.0 V at 80°C after providing each cathode with O₂ with a relative humidity of 100%, and each anode with H₂ with a relative humidity of 100%.

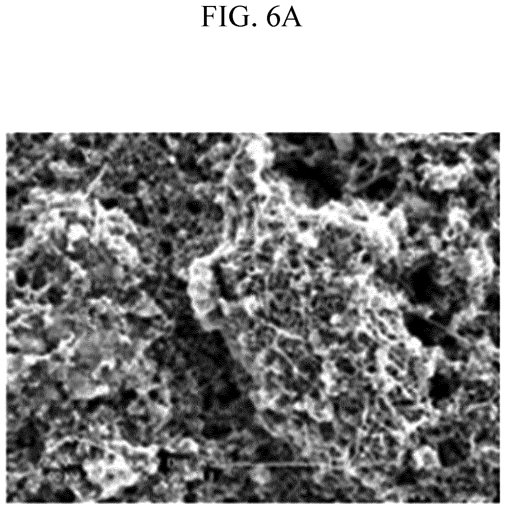

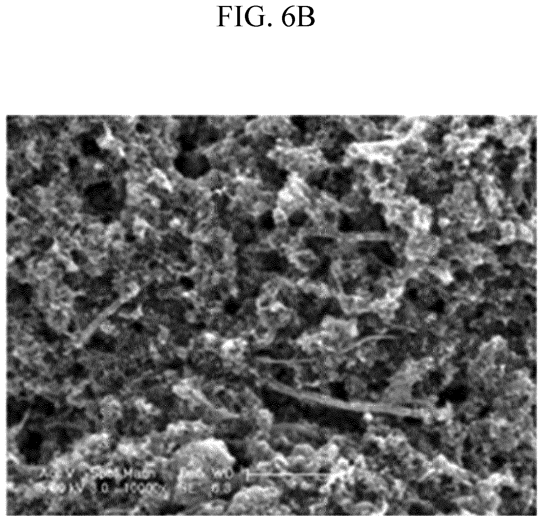

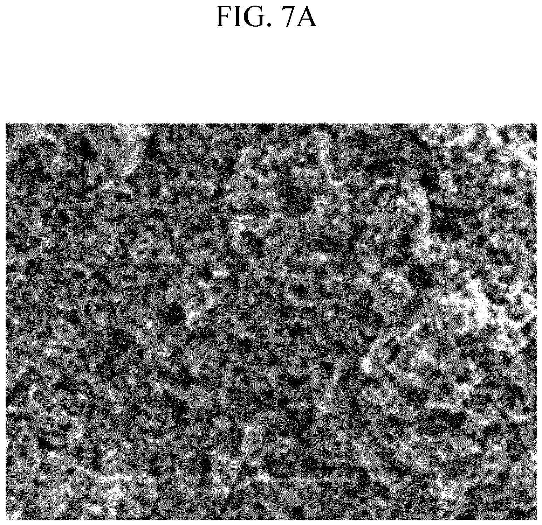

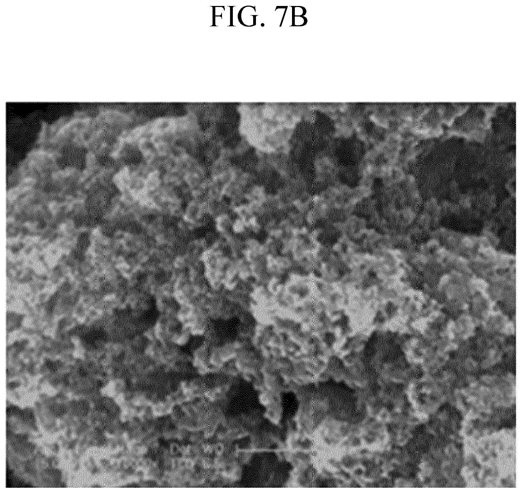

The catalyst layers according to Example 2 and Comparative Example 1 were examined regarding the cross-section using a scanning electron microscope (SEM) before the cycle, that is, before corrosion of the supporter, and after the cycle, that is, after the corrosion of the supporter. The results are provided in FIGs. 6A, 6B, 7A, and 7B.

FIGs. 6A and 6B are respectively the scanning electron microscope photographs of the supporter before and after the corrosion in the catalyst layer for a fuel cell surface according to Example 2. FIGs. 7A and 7B are respectively the scanning electron microscope photographs of the supporter before and after the corrosion in the catalyst layer for a fuel cell surface according to Comparative Example 1.

Referring to FIGs. 6A to 7B, the structure of the catalyst layer for a fuel cell according to Example 2 was not changed much despite the corrosion of the supporter, while the structure of the catalyst layer for a fuel cell according to Comparative Example 1 was dramatically changed. Accordingly, the catalyst layer for a fuel cell according to one embodiment of the present invention was suppressed from structural collapse.

### Evaluation 2: Durability of Catalyst Layer

The membrane-electrode assemblies according to Example 2 and Comparative Example 1 were cycled by repetitively applying with a voltage in a range of 0.6 V to 1.0 V by linearly changing the voltage within the range at 80°C after providing each cathode with O₂ with a relative humidity of 100% and each anode with H₂ with a relative humidity of 100%.

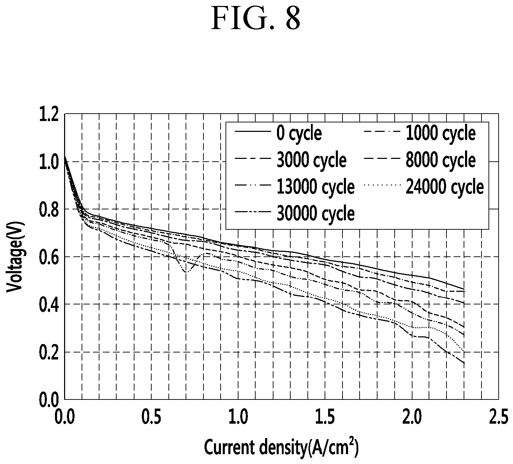

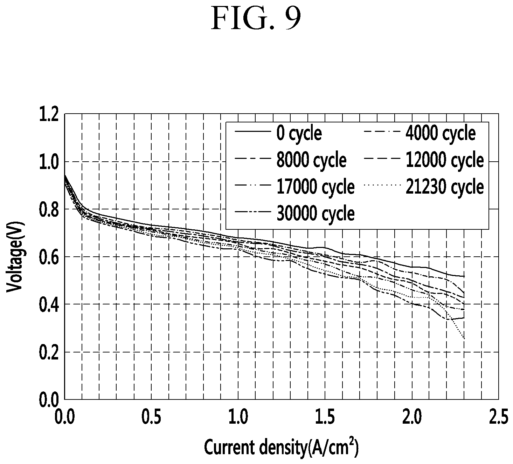

The results are provided in FIGs. 8 and 9.

FIG. 8 is a graph showing current density of the catalyst layer for a fuel cell according to Comparative Example 1 as the repeated cycles, and FIG. 9 is a graph showing current density of the catalyst layer for a fuel cell according to Example 2 as the repeated cycles.

Referring to FIGs. 8 and 9, the catalyst layer of Example 2 had a voltage drop of 30 mV at 0.8 A/cm² at 14,000 cycles, while the catalyst layer of Comparative Example 1 had the same voltage drop at only 5,500 cycles. Accordingly, the catalyst layer for a fuel cell according to one embodiment of the present invention had excellent durability for corrosion of the supporter.

### Evaluation 3: Thickness and Porosity Changes of Catalyst Layer

The membrane-electrode assemblies according to Examples 1 to 5 and Comparative Examples 1 to 4 were cycled by repetitively applying with a voltage of 0.6 V to 1.0 V by providing each cathode with O₂ having a relative humidity of 100% and each anode with H₂ having a relative humidity of 100%.

The catalyst layers of Examples 1 to 5 and Comparative Examples 1 to 4 were measured regarding thickness and porosity change before the cycles, that is, before the corrosion of the supporters, and after the cycles, that is, after the corrosion of the supporters. The results are provided in the following Table 1.

The thickness of the catalyst layer was measured using the SEM photograph of the cross section of the membrane-electrode assembly, and the porosity of the catalyst layer was measured using a porosimeter.

**Table 1**

| | Thickness of catalyst layer (micron) | | Porosity of catalyst layer (volume%) | |
|---|---|---|---|---|
| | Before cycle operation | After cycle operation | Before cycle operation | After cycle operation |
| Example 1 | 7.0 | 6.7 | 53 | 50 |
| Example 2 | 7.3 | 6.9 | 55 | 53 |
| Example 3 | 7.5 | 7.2 | 58 | 55 |
| Example 4 | 7.3 | 7.0 | 57 | 55 |
| Example 5 | 6.8 | 6.4 | 52 | 48 |
| Comparative Example 1 | 6.3 | 5.5 | 48 | 41 |
| Comparative Example 2 | 8.3 | 6.8 | 65 | 52 |
| Comparative Example 3 | 6.5 | 5.5 | 48 | 41 |
| Comparative Example 4 | 8.1 | 6.3 | 64 | 52 |

### Evaluation 4: Power Output Performance of Membrane-electrode Assembly

The membrane-electrode assemblies according to Examples 1 to 5 and Comparative Examples 1 to 4 were operated with a voltage of 0.4 V to 1.0 V under the following conditions and measured regarding power output density. The results are provided in the following Table 2.

The tests were performed under a condition of a temperature of 65°C, relative humidity of 50%/50%, a gauge pressure of 0 kPa/0 kPa, by flowing H₂ and air of 9.33 ccm and 188.32 ccm of the respective anode and cathode flow rates until the current was less than 200mA/ cm², and by flowing H₂ and air at a stoichiometry (the amount of hydrogen gas supplied in an anode/ the amount of air supplied in a cathode, λ) of 1.5/2.0 after the current was increased to 200 mA/cm² or more.

**Table 2**

| | Power output density (mW/cm²) |
|---|---|
| Example 1 | 615.7 |
| Example 2 | 608.5 |
| Example 3 | 628.6 |
| Example 4 | 613.7 |
| Example 5 | 605.3 |
| Comparative Example 1 | 578.2 |
| Comparative Example 2 | 539.0 |
| Comparative Example 3 | 581.5 |
| Comparative Example 4 | 535.4 |

Referring to Table 2, the membrane-electrode assemblies according to Examples 1 to 5 had higher power output density than the ones according to Comparative Examples 1 to 4. Accordingly, the membrane-electrode assembly for a fuel cell including the catalyst layer according to one embodiment of the present invention had excellent power output performance.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A catalyst for a fuel cell, comprising
a composite supporter comprising a mixture of a spherical-shaped supporter and a fibrous supporter at a mixing ratio of 60wt%:40wt% to 95wt%:5wt%, and an active metal catalyst supported on the composite supporter, **characterised in that**
the fibrous supporter comprises a graphitized carbon nanofiber.

2. A catalyst for a fuel cell according to claim 1, wherein the fibrous supporter is included in an amount of 5 wt% to 30 wt% based on the total amount of the composite supporter.

3. A catalyst for according to fuel cell of claim 1 or 2, wherein the fibrous supporter relative to the spherical-shaped supporter has a diameter ratio in a range from 2 to 10.

4. A catalyst for a fuel cell according to claim 1 or 2, wherein the fibrous supporter relative to the spherical-shaped supporter has a diameter ratio in a range from 2 to 5.

5. A catalyst for a fuel cell according to any preceding claim, wherein the spherical-shaped supporter comprises at least one material selected from graphite and carbon black.

6. A catalyst for a fuel cell of claim 5, wherein the carbon black comprises denka black, ketjen black, acetylene black, channel black, furnace black, lamp black, thermal black, or a combination thereof.

7. A catalyst for a fuel cell according to any preceding claim, wherein the composite supporter is included in an amount of 20 wt% to 80 wt% based on the total amount of the catalyst.

8. A catalyst for a fuel cell according to any one of claims 1 to 6, wherein the composite supporter is included in an amount of 30 w% to 60 wt% based on the total amount of the catalyst.

9. An electrode for a fuel cell, comprising
an electrode substrate; and
a catalyst layer comprising the catalyst according to any preceding claim disposed on the electrode substrate.

10. An electrode for a fuel cell according to claim 9, wherein the catalyst layer further comprises an ionomer.

11. An electrode for a fuel cell according to claim 10, wherein the ionomer is included in an amount of 15 wt% to 50 wt% based on the total amount of the catalyst layer.

12. An electrode for a fuel cell according to claim 10, wherein the ionomer is included in an amount of 20 wt% to 40 wt% based on the total amount of the catalyst layer.

13. A membrane-electrode assembly for a fuel cell, comprising
a cathode;
an anode facing the cathode; and
a polymer electrolyte membrane interposed between the cathode and the anode,
wherein the cathode and the anode comprise:
an electrode substrate; and
a catalyst layer comprising the catalyst according to any one of claims 1 to 8 disposed on the electrode substrate.

14. A fuel cell system, comprising
a fuel supplier for supplying a mixed fuel including fuel and water;
a reforming part for reforming the mixed fuel and generating a reformed gas comprising hydrogen gas;
a stack comprising the membrane-electrode assembly according to claim 13 and a separator disposed on either side of the membrane-electrode assembly, the stack being for generating electrical energy through electrochemical reaction of the reformed gas supplied from the reforming part, and an oxidant; and
an oxidant supplier for supplying the oxidant to the reforming part and the stack.

## Patentansprüche

1. Katalysator für eine Brennstoffzelle, umfassend
einen Verbundträger, der eine Mischung von einem kugelförmigen Träger und einem faserförmigen Träger in einem Mischungsverhältnis von 60 Gew.-%:40 Gew.-% bis 95 Gew.-%:5 Gew.-% umfasst, und einen auf dem Verbundträger geträgerten Aktivmetallkatalysator, **dadurch gekennzeichnet, dass**
der faserförmige Träger eine graphitisierte Kohlenstoffnanofaser umfasst.

2. Katalysator für eine Brennstoffzelle nach Anspruch 1, wobei der faserförmige Träger in einer Menge von 5 Gew.-% bis 30 Gew.-% bezogen auf die Gesamtmenge des Verbundträgers eingeschlossen ist.

3. Katalysator für nach einer Brennstoffzelle nach Anspruch 1 oder 2, wobei der faserförmige Träger in Bezug auf den kugelförmigen Träger ein Durchmesserverhältnis in einem Bereich von 2 bis 10 aufweist.

4. Katalysator für eine Brennstoffzelle nach Anspruch 1 oder 2, wobei der faserförmige Träger in Bezug auf den kugelförmigen Träger ein Durchmesserverhältnis in einem Bereich von 2 bis 5 aufweist.

5. Katalysator für eine Brennstoffzelle nach einem vorstehenden Anspruch, wobei der kugelförmige Träger mindestens ein Material umfasst, das aus Graphit und Industrieruß ausgewählt ist.

6. Katalysator für eine Brennstoffzelle nach Anspruch 5, wobei der Industrieruß Denka Black, Ketjenblack, Acetylenruß, Channel-Ruß, Ofenruß, Flammruß, Thermalruß oder eine Kombination davon umfasst.

7. Katalysator für eine Brennstoffzelle nach einem vorstehenden Anspruch, wobei der Verbundträger in einer Menge von 20 Gew.-% bis 80 Gew.-% bezogen auf die Gesamtmenge des Katalysators eingeschlossen ist.

8. Katalysator für eine Brennstoffzelle nach einem der Ansprüche 1 bis 6, wobei der Verbundträger in einer Menge von 30 Gew.-% bis 60 Gew.-% bezogen auf die Gesamtmenge des Katalysators eingeschlossen ist.

9. Elektrode für eine Brennstoffzelle, umfassend
ein Elektrodensubstrat; und
eine Katalysatorschicht, die den Katalysator nach einem vorstehenden Anspruch, angeordnet auf dem Elektrodensubstrat, umfasst.

10. Elektrode für eine Brennstoffzelle nach Anspruch 9, wobei die Katalysatorschicht ferner ein lonomer umfasst.

11. Elektrode für eine Brennstoffzelle nach Anspruch 10, wobei das lonomer in einer Menge von 15 Gew.-% bis 50 Gew.-% bezogen auf die Gesamtmenge der Katalysatorschicht eingeschlossen ist.

12. Elektrode für eine Brennstoffzelle nach Anspruch 10, wobei das lonomer in einer Menge von 20 Gew.-% bis 40 Gew.-% bezogen auf die Gesamtmenge der Katalysatorschicht eingeschlossen ist.

13. Membran-Elektroden-Anordnung für eine Brennstoffzelle, umfassend
eine Kathode;
eine der Katode zugewandte Anode; und
eine zwischen der Kathode und der Anode eingefügte Polymerelektrolytmembran,
wobei die Kathode und die Anode umfassen:
ein Elektrodensubstrat; und
eine Katalysatorschicht, die den Katalysator nach einem der Ansprüche 1 bis 8, angeordnet auf dem Elektrodensubstrat, umfasst.

14. Brennstoffzellensystem, umfassend
eine Brennstoffzuführvorrichtung zum Zuführen eines Brennstoff und Wasser einschließenden Brennstoffgemischs;
einen Reformierungsteil zum Reformieren des Brennstoffgemischs und Erzeugen eines reformierten Gases, welches Wasserstoffgas umfasst,
einen Stapel, der die Membran-Elektroden-Anordnung nach Anspruch 13 und einen Separator, angeordnet auf einem von beiden Seiten der Membran-Elektroden-Anordnung, umfasst, wobei der Stapel zum Erzeugen elektrischer Energie durch elektrochemische Reaktion des reformierten Gases, das aus dem Reformierungsteil zugeführt wird, und eines Oxidationsmittels dient; und
eine Oxidationsmittelzuführvorrichtung zum Zuführen des Oxidationsmittels zum Reformierungsteil und zum Stapel.

## Revendications

1. Catalyseur pour une pile à combustible, comprenant :
un support composite comprenant un mélange d'un support de forme sphérique et d'un support fibreux en un rapport de mélange de 60 % en poids:40 % en poids à 95 % en poids:5 % en poids et un catalyseur de métal actif supporté sur le support composite, **caractérisé en ce que** :
le support fibreux comprend une nanofibre de carbone graphitisé.

2. Catalyseur pour une pile à combustible selon la revendication 1, dans lequel le support fibreux est inclus en une quantité de 5 % en poids à 30 % en poids sur la base de la quantité totale du support composite.

3. Catalyseur pour selon une pile à combustible de la revendication 1 ou 2, dans lequel le support fibreux relativement au support de forme sphérique a un rapport de diamètre dans un intervalle de 2 à 10.

4. Catalyseur pour une pile à combustible selon la revendication 1 ou 2, dans lequel le support fibreux relativement au support de forme sphérique a un rapport de diamètre dans un intervalle de 2 à 5.

5. Catalyseur pour une pile à combustible selon l'une quelconque des revendications précédentes, dans lequel le support de forme sphérique comprend au moins un matériau choisi parmi le graphite et le noir de carbone.

6. Catalyseur pour une pile à combustible selon la revendication 5, dans lequel le noir de carbone comprend un noir denka, un noir ketjen, un noir d'acétylène, un noir au tunnel, un noir de fourneau, un noir de fumée, un noir thermique ou une combinaison de ceux-ci.

7. Catalyseur pour une pile à combustible selon l'une quelconque des revendications précédentes, dans lequel le support composite est inclus en une quantité de 20 % en poids à 80 % en poids sur la base de la quantité totale du catalyseur.

8. Catalyseur pour une pile à combustible selon l'une quelconque des revendications 1 à 6, dans lequel le support composite est inclus en une quantité de 30 % en poids à 60 % en poids sur la base de la quantité totale du catalyseur.

9. Electrode pour une pile à combustible, comprenant :
un substrat d'électrode ; et
une couche de catalyseur comprenant le catalyseur selon l'une quelconque des revendications précédentes placée sur le substrat d'électrode.

10. Electrode pour une pile à combustible selon la revendication 9, dans laquelle la couche de catalyseur comprend en outre un ionomère.

11. Electrode pour une pile à combustible selon la revendication 10, dans laquelle l'ionomère est inclus en une quantité de 15 % en poids à 50 % en poids sur la base de la quantité totale de la couche de catalyseur.

12. Electrode pour une pile à combustible selon la revendication 10, dans laquelle l'ionomère est inclus en une quantité de 20 % en poids à 40 % en poids sur la base de la quantité totale de la couche de catalyseur.

13. Assemblage membrane-électrode pour une pile à combustible, comprenant :
une cathode ;
une anode faisant face à la cathode ; et
une membrane d'électrolyte de polymère interposée entre la cathode et l'anode,
dans lequel la cathode et l'anode comprennent :
un substrat d'électrode ; et
une couche de catalyseur comprenant le catalyseur selon l'une quelconque des revendications 1 à 8 placée sur le substrat d'électrode.

14. Système de pile à combustible, comprenant :
un fournisseur de combustible pour fournir un combustible mélangé incluant du combustible et de l'eau ;
une partie de reformage pour reformer le combustible mélangé et générer un gaz reformé comprenant de l'hydrogène gazeux ;
un empilement comprenant l'assemblage membrane-électrode selon la revendication 13 et un séparateur placé sur l'un ou l'autre côté de l'assemblage membrane-électrode, l'empilement servant à générer une énergie électrique par une réaction électrochimique du gaz reformé fourni à partir de la partie de reformage et d'un oxydant ; et
un fournisseur d'oxydant pour fournir l'oxydant à la partie de reformage et à l'empilement.
